(19) Europäisches Patentamt
European Patent Office
Office européen des brevets

(11) **EP 3 940 326 A1**

(12) **EUROPEAN PATENT APPLICATION**
published in accordance with Art. 153(4) EPC

(43) Date of publication:
**19.01.2022 Bulletin 2022/03**

(21) Application number: **19918899.6**

(22) Date of filing: **15.08.2019**

(51) International Patent Classification (IPC):
***F25D 29/00*** *(2006.01)*

(52) Cooperative Patent Classification (CPC):
**F25D 29/00; G06N 3/00**

(86) International application number:
**PCT/CN2019/100740**

(87) International publication number:
**WO 2020/181723 (17.09.2020 Gazette 2020/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.03.2019 CN 201910189691**

(71) Applicants:
• **Qingdao Haier Refrigerator Co., Ltd**
**Qingdao, Shandong 266101 (CN)**

• **Haier Smart Home Co., Ltd.**
**Qingdao, Shandong 266101 (CN)**

(72) Inventors:
• **LI, Guixi**
**Qingdao, Shandong 266101 (CN)**
• **DANG, Guangming**
**Qingdao, Shandong 266101 (CN)**

(74) Representative: **Lavoix**
**Bayerstraße 83**
**80335 München (DE)**

(54) **COMPARTMENT TEMPERATURE AND HUMIDITY GENERATION METHOD AND DEVICE FOR REFRIGERATOR**

(57)    The present invention discloses a method and apparatus for generating a temperature and a humidity of a compartment of a refrigerator. The method comprises the following steps: coding based on attribute values of all foods in the compartment to obtain a first population; generating the fitness of each parent individual in the first population, and deleting several parent individuals from the first population to obtain a second population; coding and crossing from the second group and mutating to obtain several offspring individuals, and forming the first population from the several offspring individuals; setting the temperature and humidity of the compartment to an optimal temperature and an optimal humidity of a parent individual with the highest fitness in the first population, respectively.

Obtain all foods in a storage compartment and an attribute value of each food, and coding the attribute value of each food to obtain a first population, wherein the attribute value of the food at least comprises: an identifier capable of solely identifying the food, a stored duration, an optimal temperature, an optimal humidity, a take-out frequency, an economic value and a shelf life — 101

Constantly perform the following operations until an fitness of each parent individual in the first population meets a preset condition, the operations specifically comprising: generating the fitness of each parent individual in the first population, and deleting several parent individuals from the first population according to the principle that the higher the fitness is, the larger a selection probability is, to obtain a second population; selecting several tuples from a second population, wherein each tuple comprises two different parent individuals, coding and crossing two parent individuals in each tuple and generating two offspring individuals, and mutating several individuals in all offspring individuals to obtain the first population — 102

Set the temperature and humidity of the storage compartment to an optimal temperature and an optimal humidity of a parent individual with the highest fitness in the first population, respectively — 103

**FIG. 1**

**EP 3 940 326 A1**

**Description**

The present application claims priority to Chinese Patent Application No. 201910189691.7, filed to the Chinese Patent Office on March 13, 2019 and titled "Method and Apparatus for Generating Temperature and Humidity of Storage Compartment of Refrigerator", the content of which is incorporated herein by reference in its entirety.

**TECHNICAL FIELD**

The present invention relates to the technical field of refrigeration devise, and particularly to a method and an apparatus for generating a temperature and a humidity of a storage compartment of a refrigerator.

**BACKGROUND**

A refrigerator is a household appliance often used in people's daily life. In practical use, a user usually store many types of food in a storage compartment. It may be understood that each type of food has its own optimum temperature and humidity. Hence, all types of food need to be taken into account upon setting the temperature and humidity of the storage compartment.

Hence, it is a problem to be solved urgently to design a method and an apparatus for automatically setting the temperature and humidity of the storage compartment in a refrigerator.

**SUMMARY**

An object of the present invention is to provide a method and an apparatus for generating a temperature and a humidity of a storage compartment of a refrigerator.

To achieve one of the above objects of invention, an embodiment of the present invention provides a method for generating a temperature and a humidity of a storage compartment of a refrigerator. The method comprises the following steps:

obtaining all foods in a storage compartment and an attribute value of each food, and coding the attribute value of each food to obtain a first population, wherein the attribute value of the food at least comprises: an identifier capable of solely identifying the food, a stored duration, an optimal temperature, an optimal humidity, a take-out frequency, an economic value and a shelf life;

constantly performing the following operations until an fitness of each parent individual in the first population meets a preset condition, the operations specifically comprising: generating the fitness of each parent individual in the first population, and deleting several parent individuals from the first population according to the principle that the higher the fitness is, the larger a selection probability is, to obtain a second population; selecting several tuples from the second population, wherein each tuple comprises two different parent individuals, coding and crossing two parent individuals in each tuple and generating two offspring individuals, and mutating several individuals in all offspring individuals to obtain the first population;

setting the temperature and humidity of the storage compartment to an optimal temperature and an optimal humidity of a parent individual with the highest fitness in the first population, respectively.

As an improvement of the embodiment of the present invention, the "coding the attribute value of each food" comprises: performing floating point number coding for the attribute value of each food.

As an improvement of the embodiment of the present invention, the "generating the fitness of each parent individual in the first population" comprises:

obtaining the fitness of each parent individual in the following manner: the fitness of the parent individual=a sum of the fitness of all foods, and the fitness of the food= $k(\alpha(\Delta T^*\Delta d_T)+\beta(D-d)+\gamma(\Delta H^*\Delta d_H)+\lambda E)$, where $\Delta T$ is a difference between the optimal temperature of the parent individual and the optimal temperature of the food, D is the shelf life of the food, d is the stored duration of the food, $\Delta H$ is a difference between the optimal humidity of the parent individual and the optimal humidity of the food, and E is the economic value of the food.

As an improvement of the embodiment of the present invention, the "coding and crossing two parent individuals in each tuple in several tuples and generating two offspring individuals" comprises:

for two parent individuals in each tuple in the several tuples, exchanging optimal temperatures of the two parent individuals and/or taking several intermediate temperatures between optimal temperatures of the two parent individuals and/or exchanging optimal humidities of the parent individuals and/or taking several intermediate humidities between the optimal humidities of the two parent individuals, thereby generating several offspring individuals.

As an improvement of the embodiment of the present invention, the "mutating several individuals in all offspring individuals to obtain the first population" comprises:
modifying optimal temperatures and/or optimal humidities of several target individuals randomly selected from all offspring individuals, the first population being comprised of all unselected offspring individuals and all modified offspring individuals.

An embodiment of the present invention provides an apparatus for generating a temperature and a humidity in a storage compartment of a refrigerator, comprising the following modules:

an initialization module configured to obtain all foods in a storage compartment and an attribute value of each food, and code the attribute value of each food to obtain a first population, wherein the attribute value of the food at least comprises: an identifier capable of solely identifying the food, a stored duration, an optimal temperature, an optimal humidity, a take-out frequency, an economic value and a shelf life;
an iteration module configured to constantly perform the following operations until an fitness of each parent individual in the first population meets a preset condition, the operations specifically comprising: generating the fitness of each parent individual in the first population, and deleting several parent individuals from the first population according to the principle that the higher the fitness is, the larger a selection probability is, to obtain a second population; selecting several tuples from the second population, wherein each tuple comprises two different parent individuals, coding and crossing two parent individuals in each tuple and generating two offspring individuals, and mutating several individuals in all offspring individuals to obtain the first population;
a setting module configured to set the temperature and humidity of the storage compartment to an optimal temperature and an optimal humidity of a parent individual with the highest fitness in the first population, respectively.

As an improvement of the embodiment of the present invention, the initialization module is further configured to perform floating point number coding for the attribute value of each food.

As an improvement of the embodiment of the present invention, the iteration module is further configured to: obtain the fitness of each parent individual in the following manner: the fitness of the parent individual=a sum of the fitness of all foods, and the fitness of the food= $k(\alpha(\Delta T^* \Delta d_T)+\beta(D-d)+\gamma(\Delta H^* \Delta d_H)+\lambda E)$, where $\Delta T$ is a difference between the optimal temperature of the parent individual and the optimal temperature of the food, D is the shelf life of the food, d is the stored duration of the food, $\Delta H$ is a difference between the optimal humidity of the parent individual and the optimal humidity of the food, and E is the economic value of the food.

As an improvement of the embodiment of the present invention, the iteration module is further configured to: for two parent individuals in each tuple in the several tuples, exchange optimal temperatures of the two parent individuals and/or take several intermediate temperatures between optimal temperatures of the two parent individuals and/or exchange optimal humidities of the parent individuals and/or take several intermediate humidities between the optimal humidities of the two parent individuals, thereby generating several offspring individuals.

As an improvement of the embodiment of the present invention, the iteration module is further configured to: modify optimal temperatures and/or optimal humidities of several target individuals randomly selected from all offspring individuals, the first population being comprised of all unselected offspring individuals and all modified offspring individuals.

The technical effects of the present invention relative to the prior art are as follows: embodiments of the present invention provide a method and apparatus for generating a temperature and a humidity of a storage compartment of a refrigerator, the method comprising the following steps: obtaining all foods in a storage compartment and an attribute value of each food, and coding the attribute value of each food to obtain a first population; constantly performing the following operations until an fitness of each parent individual in the first population meets a preset condition, the operations specifically comprising: generating the fitness of each parent individual in the first population, and deleting several parent individuals from the first population to obtain a second population; coding and crossing from the second group and mutating to obtain several offspring individuals, forming the first population from the several offspring individuals; setting the temperature and humidity of the storage compartment to an optimal temperature and an optimal humidity of a parent individual with the highest fitness in the first population, respectively, thereby automatically regulating the temperature and humidity of the storage compartment.

## BRIEF DESCRIPTION OF THE DRAWINGS

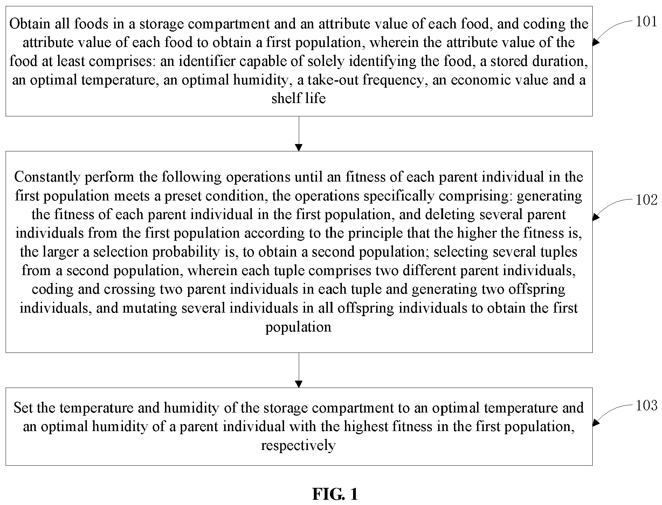

FIG. 1 is a flow chart of a method of generating a temperature and a humidity of a storage compartment of a refrigerator in embodiments of the present invention.

## DETAILED DESCRIPTION

The present invention will be described in detail in conjunction with embodiments shown in the figures. However, these embodiments are not intended to limit the present invention. Structural, methodological and function variations made by those having ordinary skill in the art according to these embodiments all are included in the protection scope of the present invention.

An embodiment of the preset disclosure discloses a method of generating a temperature and a humidity of a storage compartment of a refrigerator. As shown in FIG. 1, the method comprises the following steps:

Step 101: obtaining all foods in a storage compartment and an attribute value of each food, and coding the attribute value of each food to obtain a first population, wherein the attribute value of the food at least comprises: an identifier capable of solely identifying the food, a stored duration, an optimal temperature, an optimal humidity, a take-out frequency, an economic value and a shelf life; here, the refrigerator may include a database which contains information of all foods stored in the storage compartment, i.e., when an user places a food in the storage compartment, a current time (understandably, the current time is the placement time of the food) is obtained, and the information of the food and the placement time are stored in the database; when an user takes the food out of the storage compartment, the information of the food is deleted from the database. Here, the identifier may be a character string which is capable of solely identify a food; the stored duration of the food is a time difference between the current time and the placement time of the food, the optimal temperature is a temperature most suitable for storage of the food, the optical humidity is a humidity most suitable for storage of the food, the take-out frequency is times that a food in the same type as the food is taken out in a period of time (e.g., an user might put beef into the storage compartment for many times, and then the times that the user takes out the beef in a period of time may be the take-out frequency of the beef), the economic value is an index reflecting the price of a food (the index is directly proportional to the price of the food), and the shelf life is a duration in which the food can be storage in the storage compartment.

Here, in the first population, each individual corresponds to a food, the optimal temperature of the individual is equal to the optimal temperature of the corresponding food, and the optimal humidity of the individual is equal to the optical humidity of the corresponding food.

Step 102: constantly performing the following operations until an fitness of each parent individual in the first population meets a preset condition, the operations specifically comprising: generating the fitness of each parent individual in the first population, and deleting several parent individuals from the first population according to the principle that the higher the fitness is, the larger a selection probability is, to obtain a second population; selecting several tuples from the second population, wherein each tuple comprises two different parent individuals, coding and crossing two parent individuals in each tuple and generating two offspring individuals, and mutating several individuals in all offspring individuals to obtain the first population. Here, in the first population, if a first individual corresponds to a first food, under the temperature and humidity represented by the first individual, the first food can achieve an optimal storage effect, but remaining foods cannot achieve an optimal storage effect. Hence, iteration is performed for many times in this step, until the fitness of each parent individual meets a preset condition. The preset condition may be: a difference of fitness between every two parent individuals is lower than a certain value, or a difference between the fitness of parent individuals in last iteration and this iteration is smaller.

Step 103: setting the temperature and humidity of the storage compartment to an optimal temperature and an optimal humidity of a parent individual with the highest fitness in the first population, respectively.

Preferably, the "coding the attribute value of each food" specifically comprises: performing floating point number coding for the attribute value of each food.

Preferably, the "generating the fitness of each parent individual in the first population" specifically comprises:

obtaining the fitness of each parent individual in the following manner: the fitness of the parent individual=a sum of the fitness of all foods, and the fitness of the food= $k(\alpha(\Delta T * \Delta d_T) + \beta(D - d) + \gamma(\Delta H * \Delta d_H) + \lambda E)$, where $\Delta T$ is a difference between the optimal temperature of the parent individual and the optimal temperature of the food, D is the shelf life of the food, d is the stored duration of the food, $\Delta H$ is a difference between the optimal humidity of the parent individual and the optimal humidity of the food, and E is the economic value of the food. Here, when the temperature in the storage compartment is equal to the optimal temperature of the parent individual and the optimal humidity is equal to the optimal humidity of the parent individual, the fitness of each food varies. Hence, the fitness of each food needs to be taken into consideration.

Preferably, "coding and crossing two parent individuals in each tuple in several tuples and generating two offspring individuals" specifically comprises: for two parent individuals in each tuple in the several tuples, exchanging optimal temperatures of the two parent individuals and/or taking several intermediate temperatures between optimal temperatures of the two parent individuals and/or exchanging optimal humidities of the parent individuals and/or taking several intermediate humidities between the optimal humidities of the two parent individuals, thereby generating several offspring individuals. Here, the offspring individuals are generated in the following manner: (1) exchanging the optimal temperatures of the two parent individuals; (2) taking several intermediate temperatures between optimal temperatures of the two parent individuals; (3) exchanging optimal humidities of the parent individuals; (4) taking several intermediate humidities between the optimal humidities of the two parent individuals. In addition, the offspring individuals may be generated from an optional set in the four manners.

Preferably, the "mutating several individuals in all offspring individuals to obtain the first population" specifically comprises:
modifying optimal temperatures and/or optimal humidities of several target individuals randomly selected from all offspring individuals, the first population being comprised of all unselected offspring individuals and all modified offspring individuals.

At this time, as for the method of generating the temperature and humidity of the storage compartment of the refrigerator, the algorithm may also be adjusted according to the user's interaction habit, value orientation and so on to output a result. For example, the number of optimal days is uniformly characterized as a task form, where s represents environmental information, d represents information of the number of days of storage, q(s) represents a environmental information distribution, $q(s_{t+1} | s_t, d_t)$ represents transition from st environment to $s_{t+1}$ environment by adjusting parameters. An adaptability function is designed based on the temperature deviation $\Delta T$, the humidity deviation $\Delta H$, the economic value E, the take-out frequency k, the stored duration d of the food and the shelf life D of the food. An optimum value of the function weight is found offline from experiments, and finely tuned according to the user's online use habit.

The fitness of the

$$\text{food} = \{Days(s_1, d_1, ..., s_H, d_H), q(s_1), q(s_{t+1} | s_t, d_t), H\},$$

$$d = k(\alpha(\Delta T * e^{\Delta d_T}) + \beta \ln(D - d) + \gamma(\Delta H * \Delta d_H) + \lambda E).$$

An embodiment of the present invention further provides an apparatus for generating a temperature and a humidity of a storage compartment of a refrigerator, comprising the following modules:

an initialization module configured to obtain all foods in a storage compartment and an attribute value of each food, and code the attribute value of each food to obtain a first population, wherein the attribute value of the food at least comprises: an identifier capable of solely identifying the food, a stored duration of the food, an optimal temperature, an optimal humidity, a take-out frequency, an economic value and a shelf life;
an iteration module configured to constantly perform the following operations until an fitness of each parent individual in the first population meets a preset condition, the operations specifically comprising: generating the fitness of each parent individual in the first population, and deleting several parent individuals from the first population according to the principle that the higher the fitness is, the larger a selection probability is, to obtain a second population; selecting several tuples from the second population, wherein each tuple comprises two different parent individuals, coding and crossing two parent individuals in each tuple and generating two offspring individuals, and mutating several individuals in all offspring individuals to obtain the first population;
a setting module configured to set the temperature and humidity of the storage compartment to an optimal temperature and an optimal humidity of a parent individual with the highest fitness in the first population, respectively.

Preferably, the initialization module is further configured to perform floating point number coding for the attribute value of each food.

Preferably, the iteration module is further configured to obtain the fitness of each parent individual in the following manner: the fitness of the parent individual=a sum of the fitness of all foods, and the fitness of the food= $k(\alpha(\Delta T^*\Delta d_T) + \beta(D-d) + \gamma(\Delta H^*\Delta d_H) + \lambda E)$, where $\Delta T$ 1 is a difference between the optimal temperature of the parent individual and the optimal temperature of the food, D is the shelf life of the food, d is the stored duration of the food, $\Delta H$ is a difference between the optimal humidity of the parent individual and the optimal humidity of the food, and E is the economic value of the food.

Preferably, the iteration module is further configured to: for two parent individuals in each tuple in the several tuples, exchange optimal temperatures of the two parent individuals and/or take several intermediate temperatures between optimal temperatures of the two parent individuals and/or exchange optimal humidities of the parent individuals and/or take several intermediate humidities between the optimal humidities of the two parent individuals, thereby generating several offspring individuals.

Preferably, the iteration module is further configured to: modify optimal temperatures and/or optimal humidities of several target individuals randomly selected from all offspring individuals, the first population being comprised of all unselected offspring individuals and all modified offspring individuals.

It should be understood that although the description is described according to the embodiments, not every embodiment only includes one independent technical solution, that such a description manner is only for the sake of clarity, that those skilled in the art should take the description as an integral part, and that the technical solutions in the embodiments may be suitably combined to form other embodiments understandable by those skilled in the art.

The detailed descriptions set forth above are merely specific illustrations of feasible embodiments of the present invention, and are not intended to limit the scope of protection of the present invention. All equivalent embodiments or modifications that do not depart from the art spirit of the present invention should fall within the scope of protection of the present invention.

**Claims**

1. A method of generating a temperature and a humidity of a storage compartment of a refrigerator, wherein the method comprises the following steps:

    obtaining all foods in a storage compartment and an attribute value of each food, and coding the attribute value of each food to obtain a first population, wherein the attribute value of the food at least comprises: an identifier capable of solely identifying the food, a stored duration, an optimal temperature, an optimal humidity, a take-out frequency, an economic value and a shelf life;
    constantly performing the following operations until an fitness of each parent individual in the first population meets a preset condition, the operations specifically comprising: generating the fitness of each parent individual in the first population, and deleting several parent individuals from the first population according to the principle that the higher the fitness is, the larger a selection probability is, to obtain a second population; selecting several tuples from the second population, wherein each tuple comprises two different parent individuals, coding and crossing two parent individuals in each tuple and generating two offspring individuals, and mutating several individuals in all offspring individuals to obtain the first population;
    setting the temperature and humidity of the storage compartment to an optimal temperature and an optimal humidity of a parent individual with the highest fitness in the first population, respectively.

2. The method of generating a temperature and a humidity of a storage compartment of a refrigerator according to claim 1, wherein the "coding the attribute value of each food" comprises: performing floating point number coding for the attribute value of each food.

3. The method of generating a temperature and a humidity of a storage compartment of a refrigerator according to claim 1, wherein the "generating the fitness of each parent individual in the first population" comprises:
obtaining the fitness of each parent individual in the following manner: the fitness of the parent individual=a sum of the fitness of all foods, and the fitness of the food= $k(\alpha(\Delta T * \Delta d_T) + \beta(D-d) + \gamma(\Delta H * \Delta d_H) + \lambda E)$, where $\Delta T$ is a difference between the optimal temperature of the parent individual and the optimal temperature of the food, D is the shelf life of the food, d is the stored duration of the food, $\Delta H$ is a difference between the optimal humidity of the parent individual and the optimal humidity of the food, and E is the economic value of the food.

4. The method of generating a temperature and a humidity of a storage compartment of a refrigerator according to claim 1, wherein the "coding and crossing two parent individuals in each tuple in several tuples and generating two offspring individuals" comprises:
for two parent individuals in each tuple in the several tuples, exchanging optimal temperatures of the two parent individuals and/or taking several intermediate temperatures between optimal temperatures of the two parent individuals and/or exchanging optimal humidities of the parent individuals and/or taking several intermediate humidities between the optimal humidities of the two parent individuals, thereby generating several offspring individuals.

5. The method of generating a temperature and a humidity of a storage compartment of a refrigerator according to claim 2, wherein the "mutating several individuals in all offspring individuals to obtain the first population" comprises:
modifying optimal temperatures and/or optimal humidities of several target individuals randomly selected from all offspring individuals, the first population being comprised of all unselected offspring individuals and all modified offspring individuals.

6. An apparatus for generating a temperature and a humidity in a storage compartment of a refrigerator, comprising the following modules:

    an initialization module configured to obtain all foods in a storage compartment and an attribute value of each food, and code the attribute value of each food to obtain a first population, wherein the attribute value of the food at least comprises: an identifier capable of solely identifying the food, a stored duration, an optimal temperature, an optimal humidity, a take-out frequency, an economic value and a shelf life;

an iteration module configured to constantly perform the following operations until an fitness of each parent individual in the first population meets a preset condition, the operations specifically comprising: generating the fitness of each parent individual in the first population, and deleting several parent individuals from the first population according to the principle that the higher the fitness is, the larger a selection probability is, to obtain a second population; selecting several tuples from the second population, wherein each tuple comprises two different parent individuals, coding and crossing two parent individuals in each tuple and generating two offspring individuals, and mutating several individuals in all offspring individuals to obtain the first population;

a setting module configured to set the temperature and humidity of the storage compartment to an optimal temperature and an optimal humidity of a parent individual with the highest fitness in the first population, respectively.

7. The apparatus for generating a temperature and a humidity of a storage compartment of a refrigerator according to claim 6, wherein the initialization module is further configured to perform floating point number coding for the attribute value of each food.

8. The apparatus for generating a temperature and a humidity of a storage compartment of a refrigerator according to claim 6, wherein the iteration module is further configured to:

obtain the fitness of each parent individual in the following manner: the fitness of the parent individual=a sum of the fitness of all foods, and the fitness of the food= $k(\alpha(\Delta T^*\Delta d_T)+\beta(D-d)+\gamma(\Delta H^*\Delta d_H)+\lambda E)$, where $\Delta T$ is a difference between the optimal temperature of the parent individual and the optimal temperature of the food, D is the shelf life of the food, d is the stored duration of the food, $\Delta H$ is a difference between the optimal humidity of the parent individual and the optimal humidity of the food, and E is the economic value of the food.

9. The apparatus for generating a temperature and a humidity of a storage compartment of a refrigerator according to claim 6, wherein the iteration module is further configured to:

for two parent individuals in each tuple in the several tuples, exchange optimal temperatures of the two parent individuals and/or take several intermediate temperatures between optimal temperatures of the two parent individuals and/or exchange optimal humidities of the parent individuals and/or take several intermediate humidities between the optimal humidities of the two parent individuals, thereby generating several offspring individuals.

10. The apparatus for generating a temperature and a humidity of a storage compartment of a refrigerator according to claim 7, wherein the iteration module is further configured to:

modify optimal temperatures and/or optimal humidities of several target individuals randomly selected from all offspring individuals, the first population being comprised of all unselected offspring individuals and all modified offspring individuals.

Obtain all foods in a storage compartment and an attribute value of each food, and coding the attribute value of each food to obtain a first population, wherein the attribute value of the food at least comprises: an identifier capable of solely identifying the food, a stored duration, an optimal temperature, an optimal humidity, a take-out frequency, an economic value and a shelf life ⟋— 101

Constantly perform the following operations until an fitness of each parent individual in the first population meets a preset condition, the operations specifically comprising: generating the fitness of each parent individual in the first population, and deleting several parent individuals from the first population according to the principle that the higher the fitness is, the larger a selection probability is, to obtain a second population; selecting several tuples from a second population, wherein each tuple comprises two different parent individuals, coding and crossing two parent individuals in each tuple and generating two offspring individuals, and mutating several individuals in all offspring individuals to obtain the first population ⟋— 102

Set the temperature and humidity of the storage compartment to an optimal temperature and an optimal humidity of a parent individual with the highest fitness in the first population, respectively ⟋— 103

**FIG. 1**

## INTERNATIONAL SEARCH REPORT

| International application No. |
| --- |
| **PCT/CN2019/100740** |

| A. | CLASSIFICATION OF SUBJECT MATTER |
| --- | --- |
| | F25D 29/00(2006.01)i |

According to International Patent Classification (IPC) or to both national classification and IPC

| B. | FIELDS SEARCHED |
| --- | --- |

Minimum documentation searched (classification system followed by classification symbols)

F25D29; F25D11

Documentation searched other than minimum documentation to the extent that such documents are included in the fields searched

Electronic data base consulted during the international search (name of data base and, where practicable, search terms used)

CNTXT, CNABS, CNKI, DWPI, VEN, SIPOABS: 温度, 湿度, 交叉, 变异, 适应度, 自适应, 遗传算法, 人工智能, AI, temperature, humidity, crossover, variation, self-adapt+, selfadapt+, self w adapt+, genetic w algorithm, heredity w algorithm, artificial w intelligent

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 107606870 A (SHENZHEN YICHUANG INFORMATION TECHNOLIGY CO., LTD.) 19 January 2018 (2018-01-19)<br>description, paragraphs [0045]-[0089], and figures 1 and 2 | 1-10 |
| A | CN 109436582 A (GUANGZHOU HAOGAOLENG TECHNOLOGY CO., LTD.) 08 March 2019 (2019-03-08)<br>entire document | 1-10 |
| A | CN 105222508 A (QINGDAO HAIER INTELLIGENT HOME APPLIANCE TECHNOLOGY CO., LTD.) 06 January 2016 (2016-01-06)<br>entire document | 1-10 |
| A | CN 107477972 A (LOU, Dandan) 15 December 2017 (2017-12-15)<br>entire document | 1-10 |
| A | EP 0716278 A1 (SAMSUNG ELECTRONICS CO., LTD.) 12 June 1996 (1996-06-12)<br>entire document | 1-10 |
| A | KR 100188925 B1 (SAMSUNG ELECTRONICS CO., LTD.) 01 June 1999 (1999-06-01)<br>entire document | 1-10 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 November 2019** | **06 December 2019** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2019/100740**

**C.** DOCUMENTS CONSIDERED TO BE RELEVANT

| Category* | Citation of document, with indication, where appropriate, of the relevant passages | Relevant to claim No. |
|---|---|---|
| A | KR 100195090 B1 (SAMSUNG ELECTRONICS CO., LTD.) 15 June 1999 (1999-06-15) entire document | 1-10 |

Form PCT/ISA/210 (second sheet) (January 2015)

**INTERNATIONAL SEARCH REPORT**
Information on patent family members

International application No.

**PCT/CN2019/100740**

| Patent document cited in search report | | | Publication date (day/month/year) | Patent family member(s) | | | Publication date (day/month/year) |
|---|---|---|---|---|---|---|---|
| CN | 107606870 | A | 19 January 2018 | None | | | |
| CN | 109436582 | A | 08 March 2019 | None | | | |
| CN | 105222508 | A | 06 January 2016 | None | | | |
| CN | 107477972 | A | 15 December 2017 | None | | | |
| EP | 0716278 | A1 | 12 June 1996 | KR | 960018466 | A | 17 June 1996 |
| | | | | DE | 69515268 | D1 | 06 April 2000 |
| | | | | EP | 0716278 | B1 | 01 March 2000 |
| | | | | US | 5775124 | A | 07 July 1998 |
| | | | | CN | 1104608 | C | 02 April 2003 |
| | | | | KR | 182533 | B1 | 01 May 1999 |
| | | | | JP | H08240373 | A | 17 September 1996 |
| | | | | DE | 69515268 | T2 | 13 July 2000 |
| | | | | CN | 1143737 | A | 26 February 1997 |
| | | | | JP | 2686249 | B2 | 08 December 1997 |
| KR | 100188925 | B1 | 01 June 1999 | KR | 960018464 | A | 17 June 1996 |
| KR | 100195090 | B1 | 15 June 1999 | KR | 960018470 | A | 17 June 1996 |

Form PCT/ISA/210 (patent family annex) (January 2015)

## REFERENCES CITED IN THE DESCRIPTION

**Patent documents cited in the description**

- CN 201910189691